# EUROPEAN PATENT SPECIFICATION

(11) **EP 0 559 303 B1**
(45) Date of publication and mention of the grant of the patent: **18.09.1996**
(21) Application number: 93201504.3
(22) Date of filing: 18.02.1991
(51) Int. Cl.: B65G 47/84

(54) **Conveyor**
Förderer
Convoyeur

(30) Priority: 19.02.1990 NL 9000393
(43) Date of publication of application: 08.09.1993
(62) Divisional of application: 91200334.0
(73) Proprietor: VANDERLANDE INDUSTRIES NEDERLAND B.V., NL-5466 RB Veghel (NL)
(72) Inventor: Van den Goor, Jakobus Marie, NL-5674 SH Nuenen (NL)
(74) Representative: Vollebregt, Cornelis Jacobus, Ir.

(56) References cited:
- EP-A- 0 212 027
- FR-A- 2 388 737
- US-A- 4 738 347

## Description

The invention relates to a conveyor having a frame and an endless drivable conveying means, provided with carriers which extend parallel to each other, transversely to the conveying direction of the conveyor, said carriers being coupled to at least one endless flexible coupling means whilst at least some of said carriers support pusher shoes, said pusher shoes at desired locations being movable along the carriers in question by guide means provided on the frame.

FR-A-2 388 737 discloses such a conveyor, wherein a carrier is formed by a plate-shaped means which is fixed with its ends to angle irons, which are connected to coupling means. Rods are provided under the carrier, between the angle irons, which support rollers connected to the pusher shoes. The construction of this known structure is complicated.

US-A-4,138,008 presents a conveyor wherein the carriers are built up of two U-sections accommodating rollers which are coupled to the pusher shoes. Also this known construction is heavy and complicated.

According to the invention a pusher shoe is provided with parts which project downwards along both sides of the carrier, said parts supporting skids located under the upper surface of the carrier, said skids being movable provided on complementarily shaped parts of the carrier.

In using the structure according the invention there could be obtained a simple light-weight construction, which operates relatively silent.

The invention will be further explained hereinafter with reference to an embodiment of the construction according to the invention diagrammatically illustrated in the accompanying figures.

Figure 1 is a perspective view of part of a conveying means of a conveyor according to the invention.

Figure 2 shows a pusher shoe in cross-section supported by a carrier.

The general principle of the conveyor according to the invention may e.g. be such as described in the US Patents 4,717,011 and 4,732,259. Therefore the general construction of the conveyor according to the invention is not described and shown herein, as it is considered to be obvious to those skilled in the art.

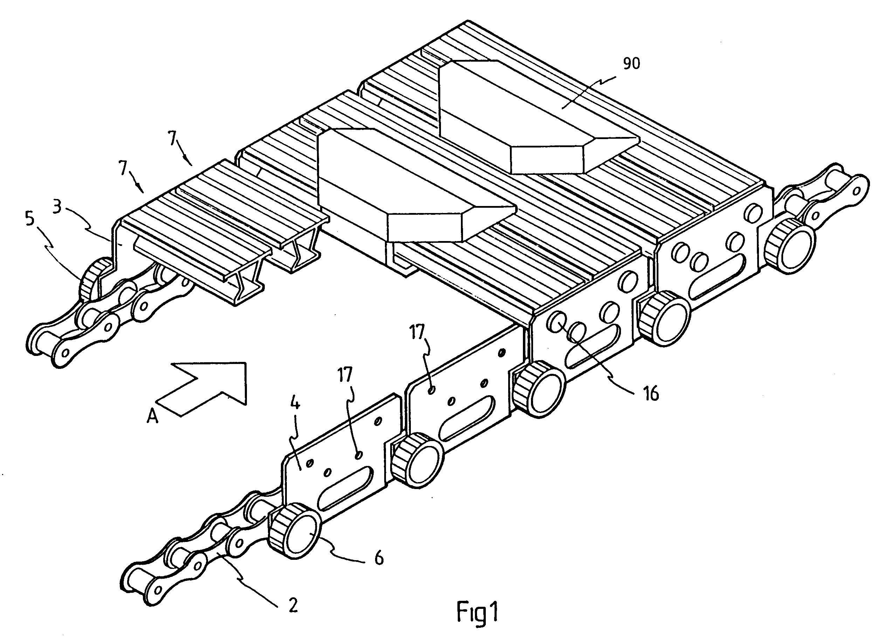

As is illustrated more in particular in Figure 1 the conveyor comprises an endless conveying means, which is only partially illustrated in Figure 1, said conveying means being provided with two endless coupling means formed by chains 1 and 2. The endless chains extending parallel to each other are passed over sprocket wheels and/or tensioning wheels (not shown), at least a few of said sprocket wheels are driven, so as to be able to move the upper parts of said chains illustrated in Figure 1 in the direction according to the arrow A.

Supporting plates 3 and 4, extending perpendicularly to the pivot pins of the chains, are secured to the chains in the manner illustrated in Figure 1. The supporting plates 3 and 4 respectively are thereby each pivotally coupled to the chain 1 or 2 in question on a single point, in such a manner that the pivot pin about which the supporting plate 3 or 4 can pivot with respect to the chain 1 or 2, coincides with the central axis of a pivot pin forming part of the chain in question. Near the pivot pin in question the chain is also provided with guide rollers 5 and 6 respectively, which support at least the upper parts of the chains 1 and 2 when they move in the direction according to the arrow A on supporting rails (not shown) or the like forming part of the device.

Two carriers 7 extending parallel to each other are provided between each pair of supporting plates 3 and 4.

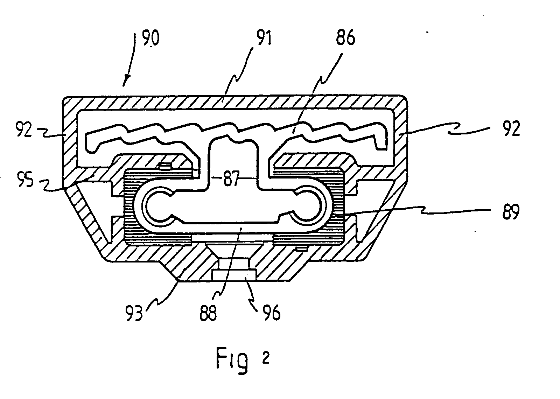

Figure 2 shows a cross-section through an embodiment of a carrier comprising the flat, plate-shaped upper side 86, which is coupled, by means of two legs 87 extending downwards from said upper side, to a double-walled foot part 88 having rounded edges and which extends parallel to the plate-shaped upper side. Complementarily shaped skids 89 of plastic material or the like are provided around the ends of the foot part 88, said skids functioning to support a pusher shoe 90 which is movable in the longitudinal direction of the carrier illustrated in sectional view in Figure 2. Said pusher shoe is provided with a pusher part 91 extending above the plate-shaped part 86 of the carrier, whereby the boundary edges of said pusher part are joined by arms 92 which extend downwards on both sides of the plate-shaped upper side 86 of the carrier, the ends of said arms, which slope downwards in a direction towards each other, being interconnected by means of a connecting plate 93. The skids 89 are thereby confined, in the manner illustrated in Figure 2, between said connecting plate 93 and supporting arms 95 located between the pusher plate 91 and the connecting plate 93. In the connecting plate there is furthermore provided a hole 96 for a guide means (not shown) to be mounted therein.

Said guide means can co-operate with guide rails (not shown) including an angle with the direction of movement according the arrow A for displacing the pusher shoe along the carrier.

## Claims

1. A conveyor having a frame and an endless drivable conveying means, provided with carriers (7) which extend parallel to each other, transversely to the conveying direction of the conveyor, said carriers being coupled to at least one endless flexible coupling means (1, 2), whilst at least some of said carriers support pusher shoes (90), said pusher shoes (90) at desired locations being movable along the carriers (7) in question by guide means provided on the frame, characterised in that a pusher shoe (90) is provided with parts (92) which project downwards along both sides of the carrier plate (86), said parts (92) supporting skids (89) located under the upper surface of the carrier plate (86), said skids being movably provided on complementarily shaped parts of the carrier.

2. A conveyor according claim 1, wherein a skid (89) has a substantially U-shaped cross-section.

3. A conveyor according claim 1 or 2, wherein the lower ends of the parts (92) of the pusher shoe (90) projecting downwards along both sides of the carrier plate (86) are interconnected by a connecting plate (93) extending below the skids (89).

4. A conveyor according claim 3, wherein the skids are arranged between the connecting plate (93) and arms (95) extending substantially parallel to the connecting plate (93) from opposite parts (92) projecting downward along both sides of the carrier.

5. A conveyor according any of the preceding claims, wherein the skids are arranged on the rounded corners of a double-walled foot part (88) of the carrier, said part being connected by legs (87) with the plate-shaped upper portion (86) of the carrier.

## Patentansprüche

1. Förderer mit einem Rahmen und einem endlos antreibbaren Fördermittel, das mit Trägern (7) versehen ist, die sich parallel zueinander und quer zur Förderrichtung des Förderers erstrecken und an mindestens einem endlosen flexiblen Kopplungsmittel (1, 2) angekoppelt sind, wobei zumindest einige der Träger Mitnehmerschuhe (90) tragen, die an gewünschten Orten entlang der betreffenden Träger (7) durch an dem Rahmen vorgesehene Führungsmittel bewegbar sind, dadurch gekennzeichnet, daß ein Mitnehmerschuh (90) mit Abschnitten (92) versehen ist, welche nach unten gerichtet entlang beider Seiten der Trägerplatte (86) vorstehen und Gleitschuhe (89) tragen, die unter der oberen Fläche der Trägerplatte (86) angeordnet und bewegbar auf komplementär geformten Abschnitten des Trägers vorgesehen sind.

2. Förderer nach Anspruch 1, wobei ein Gleitschuh (89) einen im wesentlichen U-förmigen Querschnitt aufweist.

3. Förderer nach Anspruch 1 oder 2, wobei die unteren Enden der nach unten entlang beider Seiten der Trägerplatte (86) vorstehenden Abschnitte (92) des Mitnehmerschuhs (90) durch eine Verbindungsplatte (93) verbunden sind, die sich unterhalb der Gleitschuhe (89) erstreckt.

4. Förderer nach Anspruch 3, wobei die Gleitschuhe zwischen der Verbindungsplatte (93) und Armen (95) angeordnet sind, die sich im wesentlichen parallel zu der Verbindungsplatte (93) von gegenüberliegenden Abschnitten (92) aus erstrecken, die nach unten entlang beider Seiten des Trägers vorstehen.

5. Förderer nach einem der vorangehenden Ansprüche, wobei die Gleitschuhe auf abgerundeten Ecken eines doppelwandigen Fußabschnitts (88) des Trägers angeordnet sind, das durch Schenkel (87) mit dem plattenförmigen oberen Abschnitt (86) des Trägers verbunden ist.

## Revendications

1. Transporteur comportant un châssis et des moyens d'acheminement sans fin pouvant être entraînés, muni de supports (7) s'étendant parallèlement les uns aux autres, transversalement à la direction d'acheminement du transporteur, lesdits supports étant reliés à au moins un moyen de couplage souple sans fin (1, 2), tandis qu'au moins certains desdits supports supportent des sabots pousseurs (90), lesdits sabots pousseurs (90) étant mobiles aux emplacements souhaités le long des supports (7) en question par des moyens de guidage prévus sur le châssis, caractérisé en ce qu'un sabot pousseur (90) est prévu avec des parties (92) qui font saillie vers le bas le long des deux côtés de la plaque de support (86), lesdites parties (92) supportant des patins (89) situés sous la surface supérieure de la plaque de support (86), lesdits patins étant prévus mobiles sur les parties de forme complémentaire du support.

2. Transporteur selon la revendication 1, dans lequel un patin (89) a une section transversale sensiblement en forme de U.

3. Transporteur selon la revendication 1 ou 2, dans lequel les extrémités inférieures des parties (92) du sabot pousseur (90) faisant saillie vers le bas le long des deux côtés de la plaque de support (86) sont reliées entre elles par une plaque de connexion (93) s'étendant au-dessous des patins (89).

4. Transporteur selon la revendication 3, dans lequel les patins sont agencés entre la plaque de connexion (93) et des bras (95) s'étendant sensiblement parallèlement à la plaque de connexion (93) à partir des parties opposées (92) faisant saillie vers le bas le long des deux côtés du support.

5. Transporteur selon l'une quelconque des revendications précédentes, dans lequel les patins sont agencés sur les coins arrondis d'une partie base à double paroi (88) du support, ladite partie étant reliée par des jambages (87) à la partie supérieure en forme de plaque (86) du support.
